# EUROPEAN PATENT APPLICATION

(11) **EP 4 607 634 A1**
(43) Date of publication of application: **27.08.2025**
(21) Application number: 24199942.4
(22) Date of filing: 12.09.2024
(51) Int. Cl.: H01M 10/04, H01M 10/0583

(54) **APPARATUS AND METHOD FOR MANUFACTURING ELECTRODE ASSEMBLY**

(30) Priority: 20.02.2024 KR 20240024352
(71) Applicant: SAMSUNG SDI CO., LTD., Giheung-gu Yongin-si, Gyeonggi-do 17084 (KR)
(72) Inventor: Yoo, Seung Yeol, 16678 Suwon-si, Gyeonggi-do (KR); Kim, Duck Hyun, 16678 Suwon-si, Gyeonggi-do (KR); Kim, Heon Hee, 16678 Suwon-si, Gyeonggi-do (KR); Kim, Bo Hyun, 16678 Suwon-si, Gyeonggi-do (KR); Kim, Hyeok Joo, 16678 Suwon-si, Gyeonggi-do (KR)
(74) Representative: Gulde & Partner

(57) **Abstract**

An apparatus (1) for manufacturing an electrode assembly includes a positive electrode plate supply part (30) configured to supply a positive electrode plate (71), a positive electrode plate moving part (10) configured to move the positive electrode plate (71) located on the positive electrode plate supply part (30), a negative electrode plate supply part (40) configured to supply a negative electrode plate (72), a negative electrode plate moving part (20) configured to move the negative electrode plate (72) located on the negative electrode plate supply part (40), and a stacking part (50) on which the positive electrode plate (71) moved from the positive electrode plate moving part (10) and the negative electrode plate (72) moved from the negative electrode plate moving part (20) are alternately stacked.

## Description

### BACKGROUND

### Technical Field

The present disclosure relates to an apparatus and method for manufacturing an electrode plate assembly.

### Description of the Related Art

In a method for manufacturing secondary batteries, there exist several methods for stacking positive electrode plates and negative electrode plates, and a representative method is zigzag stacking. The zigzag stacking is a method in which a separator is placed in a zigzag manner with the positive electrode plate (or the negative electrode plate) placed on the left side and the negative electrode plate (or the positive electrode plate) placed on the right side, and then stacked sequentially.

In the stacking, for example in a zigzag stacking, as the size of positive and negative electrode plates increases, a stacking speed decreases, resulting in a large amount of time being required for stacking large-sized positive and negative electrode plates in a particular shape, for example a zigzag shape. Accordingly, it is desirable to provide an apparatus and/or a method capable of rapidly stacking large-sized positive and negative electrode plates in a particular shape as for example a zigzag shape.

The above information disclosed in this Background section is provided for enhancement of understanding of the background of the present disclosure, and, therefore, it may contain information that does not constitute related art.

### SUMMARY OF THE INVENTION

The present disclosure is directed to an apparatus for manufacturing an electrode assembly with improved stacking speed.

The present disclosure is also directed to a method for manufacturing an electrode assembly with improved stacking speed.

These and other aspects and features of embodiments of the present disclosure will be described in or will be apparent from the following description of some embodiments of the present disclosure.

According to an one or more embodiments, there is provided an apparatus for manufacturing an electrode assembly, the apparatus including a positive electrode plate supply part configured to supply a positive electrode plate, a positive electrode plate moving part configured to move the positive electrode plate located on the positive electrode plate supply part, a negative electrode plate supply part configured to supply a negative electrode plate, a negative electrode plate moving part configured to move the negative electrode plate located on the negative electrode plate supply part, and a stacking part on which the positive electrode plate moved from the positive electrode plate moving part and the negative electrode plate moved from the negative electrode plate moving part are alternately stacked.

The apparatus may further include a separator moving part configured to move a separator to place the separator between the positive electrode plate and the negative electrode plate stacked on the stacking part.

The separator moving part may include a separator moving member that is in contact with the separator and configured to move between the positive electrode plate moving part and the negative electrode plate moving part to place the separator on the stacking part.

The separator moving member may be include a plurality of separator moving members, and the separator may be located between the plurality of separator moving members.

The separator moving member may be configured to move toward the positive electrode plate moving part when the positive electrode plate is stacked on the stacking part, and the separator moving member may be configured to move toward the negative electrode plate moving part when the negative electrode plate is stacked on the stacking part.

As the positive electrode plate and the negative electrode plate are stacked, the stacking part may be configured to move away from the positive electrode plate moving part and the negative electrode plate moving part.

The stacking part may be configured to move by a set distance when one positive electrode plate or one negative electrode plate is stacked.

The positive electrode plate moving part may include a positive electrode plate moving member that rotates around a positive electrode plate central shaft, and the negative electrode plate moving part may include a negative electrode plate moving member that rotates around a negative electrode plate central shaft.

The positive electrode plate moving part may include a positive electrode plate adsorption part connected to the positive electrode plate moving member and brought into contact with the positive electrode plate, and the negative electrode plate moving part may include a negative electrode plate adsorption part connected to the negative electrode plate moving member and brought into contact with the negative electrode plate.

Each of the positive electrode plate adsorption part and the negative electrode plate adsorption part may include a plurality of adsorption holes.

The positive electrode plate moving member may be configured to rotate in a first direction, and the negative electrode plate moving member may be configured to rotate in a second direction opposite to the first direction.

The positive electrode plate moving member and the negative electrode plate moving member may rotate at a same angular speed.

According to another aspect of the present disclosure, there is provided a method for manufacturing an electrode assembly, the method including a first separator moving operation of moving a separator through a separator moving part to place the separator on a stacking part, a negative electrode plate supply operation of moving a negative electrode plate located on a negative electrode plate supply part to the separator located on the stacking part through a negative electrode plate moving part, a second separator moving operation of moving the separator through the separator moving part to bring the separator into contact with the negative electrode plate located on the stacking part, and a positive electrode plate supply operation of moving a positive electrode plate located on a positive electrode plate supply part to the separator located on the stacking part through a positive electrode plate moving part.

The first separator moving operation may include moving the separator moving part toward the positive electrode plate moving part, and the second separator moving operation may include moving the separator moving part toward the negative electrode plate moving part.

The first separator moving operation may include moving the stacking part away from the positive electrode plate moving part and the negative electrode plate moving part.

The second separator moving operation may include moving the stacking part away from the positive electrode plate moving part and the negative electrode plate moving part.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a plan view of an apparatus for manufacturing an electrode assembly according to one or more embodiments of the present disclosure;
FIG. 2 is a front view of the apparatus for manufacturing an electrode assembly according to one or more embodiments of the present disclosure;
FIGS. 3 and 4 are a plan view and a front view of an apparatus for manufacturing an electrode assembly in a first state according to one or more embodiments of the present disclosure, respectively;
FIGS. 5 and 6 are a plan view and a front view of the apparatus for manufacturing an electrode assembly in a second state according to one or more embodiments of the present disclosure, respectively;
FIGS. 7 and 8 are a plan view and a front view of the apparatus for manufacturing an electrode assembly in a third state according to one or more embodiments of the present disclosure respectively;
FIGS. 9 and 10 are a plan view and a front view of the apparatus for manufacturing an electrode assembly in a fourth state according to one or more embodiments of the present disclosure, respectively;
FIGS. 11 and 12 are a plan view and a front view of the apparatus for manufacturing an electrode assembly in a fifth state, respectively, similar to the apparatus for manufacturing an electrode assembly in the first state according to one or more embodiments of the present disclosure;
FIG. 13 is a perspective view of a stacking part of the apparatus for manufacturing an electrode assembly according to one or more embodiments of the present disclosure;
FIG. 14 illustrates a first embodiment of a positive electrode plate adsorption part and a negative electrode plate adsorption part when viewed from the front, left, right, top, and bottom sides, and FIG. 15 illustrates a second embodiment of the positive electrode plate adsorption part and the negative electrode plate adsorption part when viewed from the front, left, right, top, and bottom sides; and
FIG. 16 is a flowchart of a method for manufacturing an electrode assembly according to one or more embodiments of the present disclosure.

### DETAILED DESCRIPTION

Herein, some embodiments of the present disclosure will be described, in further detail, with reference to the accompanying drawings. The terms or words used in the present disclosure and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in the present disclosure and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and/or the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being placed (or located or positioned) on the "above (or below)" or "on (or under)" a component, it may mean that the arbitrary element is placed in contact with the upper (or lower) surface of the component and may also mean that another component may be interposed between the component and any arbitrary element placed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

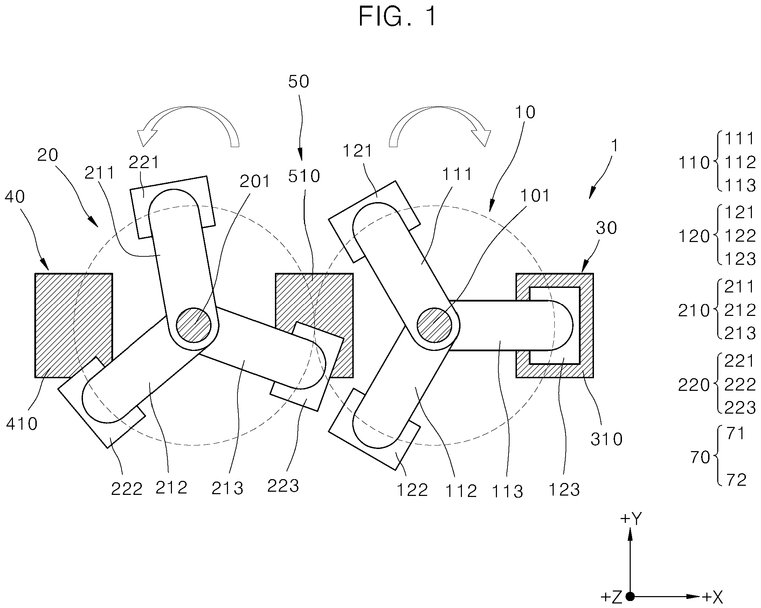

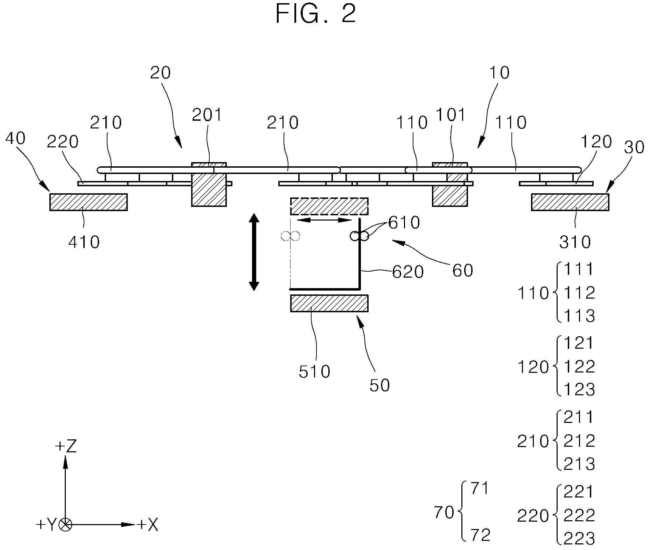

FIG. 1 is a plan view of an apparatus for manufacturing an electrode assembly according to one or more embodiments of the present disclosure, and FIG. 2 is a front view of the apparatus for manufacturing an electrode assembly according to one or more embodiments of the present disclosure.

Three axes shown in FIGS. 1 and 2, i.e., an X-axis, a Y-axis, and a Z-axis may be orthogonal to each other.

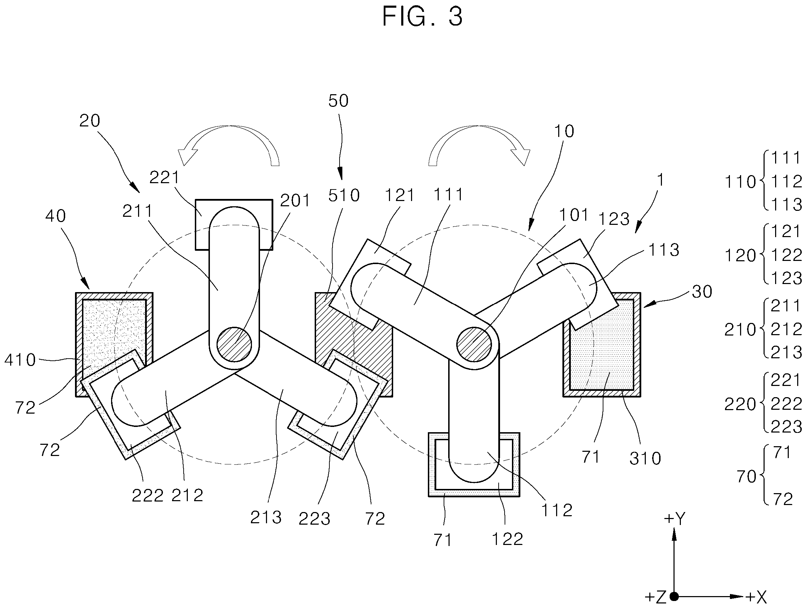

Referring to FIGS. 1 and 2, an apparatus 1 for manufacturing an electrode assembly includes a positive electrode plate moving part 10, a negative electrode plate moving part 20, a positive electrode plate supply part 30, a negative electrode plate supply part 40, and a stacking part 50. The apparatus 1 may include at least one controller to perform the operations and movements of the apparatus 1 and method and/or of the individual parts thereof. According to one or more embodiments, the apparatus 1 for manufacturing an electrode assembly may further include a separator moving part 60 and an electrode plate part (e.g., an electrode plate part 70 of FIG. 3).

The electrode plate part 70 includea a positive electrode plate (e.g., a positive electrode plate 71 of FIG. 3) and a negative electrode plate (e.g., a negative electrode plate 72 of FIG. 3).

The positive electrode plate moving part 10 moves the positive electrode plate 71. The positive electrode plate moving part 10 may move the positive electrode plate 71 placed on one side to another side. According to one or more embodiments, the positive electrode plate moving part 10 may move the positive electrode plate 71 placed on the positive electrode plate supply part 30 to the stacking part 50.

The positive electrode plate moving part 10 may rotate around a positive electrode plate central shaft 101. According to one or more embodiments, the positive electrode plate moving part 10 may rotate clockwise around the positive electrode plate central shaft 101. The positive electrode plate moving part 10 may include positive electrode plate moving members 110 and a positive electrode plate adsorption part 120.

According to one or more embodiments, the positive electrode plate moving members 110 may include a first positive electrode plate moving member 111, a second positive electrode plate moving member 112, and a third positive electrode plate moving member 113. The number of the positive electrode plate moving members 110 is not limited to three, and may be other than three. The first positive electrode plate moving member 111, the second positive electrode plate moving member 112, and the third positive electrode plate moving member 113 may be disposed at equal angles around the positive electrode plate central shaft 101. According to one or more embodiments, the angle between the first positive electrode plate moving member 111, the second positive electrode plate moving member 112, and the third positive electrode plate moving member 113 may be about 120 degrees (e.g., may be 120 degrees). Because the first positive electrode plate moving member 111, the second positive electrode plate moving member 112, and the third positive electrode plate moving member 113 are disposed at substantially the equal angle (e.g., at the equal angle) around the positive electrode plate central shaft 101, the period at which the first positive electrode plate moving member 111, the second positive electrode plate moving member 112, and the third positive electrode plate moving member 113 pass through one point may be substantially constant (e.g., may be constant).

The positive electrode plate moving member 110 may rotate around the positive electrode plate central shaft 101. A positive electrode plate moving member 110 may rotate around the positive electrode plate central shaft 101 to move the positive electrode plate 71 placed on one side to another side.

The positive electrode plate adsorption part 120 may be disposed at one end of each of the positive electrode plate moving members 110. The positive electrode plate adsorption part 120 may adsorb the positive electrode plate 71, move the positive electrode plate 71, and then place the positive electrode plate 71 on the stacking part 50. This may provide short coupling and release times. The positive electrode plate adsorption part 120 may include a first positive electrode plate adsorption member 121, a second positive electrode plate adsorption member 122, and a third positive electrode plate adsorption member 123. Each of the first positive electrode plate adsorption member 121, the second positive electrode plate adsorption member 122, and the third positive electrode plate adsorption member 123 may adsorb and move the positive electrode plate 71, and place the positive electrode plate 71 at a set position.

The positive electrode plate supply part 30 may supply the positive electrode plate 71. The positive electrode plate supply part 30 may be disposed at a set position. According to one or more embodiments, the positive electrode plate supply part 30 may be disposed on one side of the positive electrode plate moving part 10, and the stacking part 50 may be disposed on another side of the positive electrode plate moving part 10. The positive electrode plate moving part 10 may be disposed between the positive electrode plate supply part 30 and the stacking part 50.

The positive electrode plate 71 supplied from the positive electrode plate supply part 30 is moved by the positive electrode plate moving part 10 and placed on the stacking part 50.

The negative electrode plate moving part 20 moves the negative electrode plate 72. The negative electrode plate moving part 20 may move the negative electrode plate 72 placed on one side to another side. According to one or more embodiments, the negative electrode plate moving part 20 may move the negative electrode plate 72 placed on the negative electrode plate supply part 40 to the stacking part 50. By having the positive electrode plate moving part 10 and the negative electrode plate moving part 20, a stacking speed may be increased.

The negative electrode plate moving part 20 may rotate around a negative electrode plate central shaft 201. According to one or more embodiments, the negative electrode plate moving part 20 may rotate counterclockwise around the negative electrode plate central shaft 201. Due to having an opposite rotation, collisions may be avoided. The negative electrode plate moving part 20 may include negative electrode plate moving members 210 and a negative electrode plate adsorption part 220.

According to one or more embodiments, the negative electrode plate moving members 210 may include a first negative electrode plate moving member 211, a second negative electrode plate moving member 212, and a third negative electrode plate moving member 213. This may increase a stacking speed per turn. The number of the negative electrode plate moving members 210 is not limited to three, and may be other than three. The first negative electrode plate moving member 211, the second negative electrode plate moving member 212, and the third negative electrode plate moving member 213 may be disposed at equal angles around the negative electrode plate central shaft 201. According to one or more embodiments, the angle between the first negative electrode plate moving member 211, the second negative electrode plate moving member 212, and the third negative electrode plate moving member 213 may be about 120 degrees (e.g., may be 120 degrees). As the first negative electrode plate moving member 211, the second negative electrode plate moving member 212, and the third negative electrode plate moving member 213 are disposed at substantially the equal angle (e.g., at the equal angle) around the negative electrode plate central shaft 201, the period at which the first negative electrode plate moving member 211, the second negative electrode plate moving member 212, and the third negative electrode plate moving member 213 pass through one point may be substantially constant (e.g., may be constant).

The negative electrode plate moving member 210 may rotate around the negative electrode plate central shaft 201. The negative electrode plate moving member 210 may rotate around the negative electrode plate central shaft 201 to move the negative electrode plate 72 placed on one side to another side.

The negative electrode plate adsorption part 220 may be disposed at one end of each of the negative electrode plate moving members 210. The negative electrode plate adsorption part 220 may adsorb the negative electrode plate 72, move the negative electrode plate 72, and then place the negative electrode plate 72 on the stacking part 50. This may provide a fast transport mechanism with short coupling and release times. The negative electrode plate adsorption part 220 may include a first negative electrode plate adsorption member 221, a second negative electrode plate adsorption member 222, and a third negative electrode plate adsorption member 223. Each of the first negative electrode plate adsorption member 221, the second negative electrode plate adsorption member 222, and the third negative electrode plate adsorption member 223 may adsorb and move the negative electrode plate 72 and place the negative electrode plate 72 at a set position.

The negative electrode plate supply part 40 may supply the negative electrode plate 72. The negative electrode plate supply part 40 may be disposed at a set position. According to one or more embodiments, the negative electrode plate supply part 40 may be disposed on one side of the negative electrode plate moving part 20, and the stacking part 50 may be disposed on another side of the negative electrode plate moving part 20. The negative electrode plate moving part 20 may be disposed between the negative electrode plate supply part 40 and the stacking part 50.

The negative electrode plate 72 supplied from the negative electrode plate supply part 40 may be moved by the negative electrode plate moving part 20 and placed on the stacking part 50.

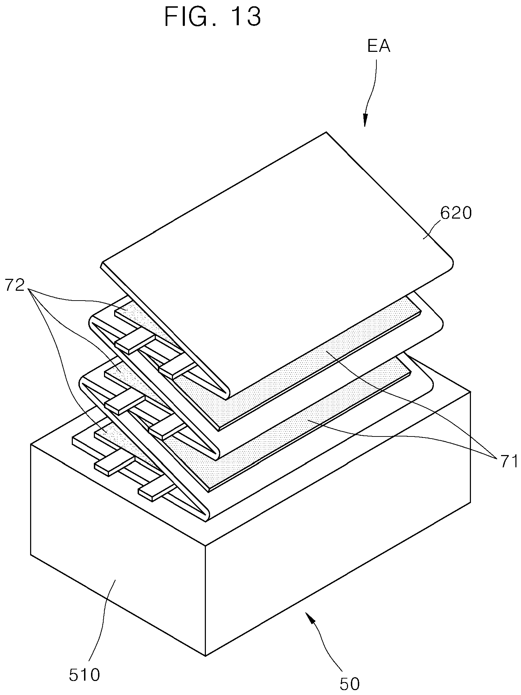

The positive electrode plate 71 and the negative electrode plate 72 may be placed on the stacking part 50. The positive electrode plate 71 and the negative electrode plate 72 may be alternately placed (e.g., see FIG. 13). The positive electrode plate 71 and the negative electrode plate 72 are placed to be alternately stacked (e.g., see FIG. 13). Accordingly, a stacking speed may be increased by the apparatus 1.

The stacking part 50 may move in one direction (e.g., a Z-axis direction). According to one or more embodiments, when the positive electrode plate 71 and/or the negative electrode plate 72 are stacked on the stacking part 50, the stacking part 50 may move downward (e.g., in a -Z-axis direction). The stacking part 50 may move by a set distance. According to one or more embodiments, the stacking part 50 may move by a distance that is substantially equal to the sum of a thickness of the positive electrode plate 71 and/or the negative electrode plate 72 and a thickness of a separator 620. As the stacking part 50 moves, the positive electrode plate moving part 10 and/or the negative electrode plate moving part 20 may not need to compensate for the height at which the positive electrode plate 71 and/or the negative electrode plate 72 are stacked.

The separator moving part 60 may move the separator 620 by being brought into contact with the separator 620. The separator moving part 60 may be placed between the positive electrode plate moving part 10 and/or the negative electrode plate moving part 20 and the stacking part 50. The separator moving part 60 may include a separator moving member 610. The separator moving member 610 may include a roller. According to one or more embodiments, the separator moving part 60 may include a plurality of separator moving members 610. According to one or more embodiments, the separator moving part 60 may include two separator moving members 610. The separator 620 may be disposed between the plurality of separator moving members 610. As the separator 620 moves, the separator moving members 610 may rotate. As the separator moving members 610 move in one direction (e.g., an X-axis direction), the separator 620 placed on the stacking part 50 may move.

Hereinafter, a process of stacking the positive electrode plate 71, the negative electrode plate 72, and the separator 620 through the apparatus 1 for manufacturing an electrode assembly will be briefly described.

The apparatus 1 for manufacturing an electrode assembly may place the separator 620 between the positive electrode plate 71 and the negative electrode plate 72 that are alternately stacked in a zigzag manner.

The positive electrode plate moving part 10 moves the positive electrode plate 71 from the positive electrode plate supply part 30 to the stacking part 50. According to one or more embodiments, the positive electrode plate moving part 10 may rotate to move the positive electrode plate 71 from the positive electrode plate supply part 30 to the stacking part 50. The positive electrode plate 71 may be moved from the positive electrode plate moving part 10 to the stacking part 50. The separator moving part 60 may be placed on an upper side of the stacking part 50 (e.g., in a +Z-axis direction).

The separator 620 of the separator moving part 60 may be placed on the stacking part 50. According to one or more embodiments, one surface of the separator 620 may be placed to be in contact with the stacking part 50.

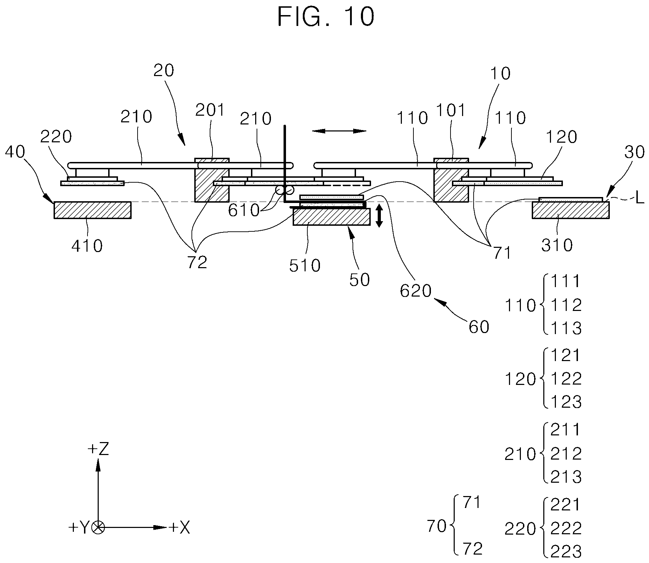

The positive electrode plate 71 moved by the positive electrode plate moving part 10 may be placed to come into contact with an upper side of the separator 620 (e.g., in the +Z-axis direction) (e.g., see FIG. 10). According to one or more embodiments, the positive electrode plate 71 may be placed on the separator 620 to be in contact therewith. After the positive electrode plate 71 is placed to be in contact with the separator 620, the separator moving members 610 of the separator moving part 60 may move. According to one or more embodiments, the separator moving members 610 may move in one direction (e.g., in the X-axis direction).

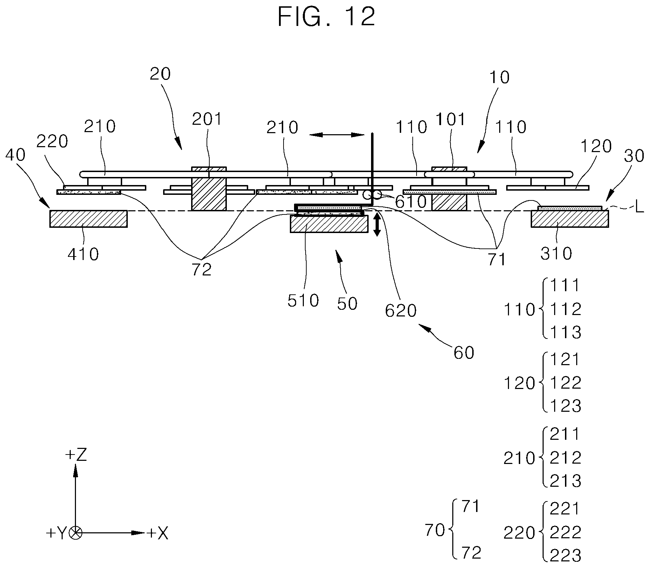

As the separator moving members 610 move in one direction, the separator 620 may be placed to cover an upper side of the positive electrode plate 71 (e.g., in the +Z-axis direction). According to one or more embodiments, the separator 620 may be in contact with the upper side of the positive electrode plate 71 (e.g., in the +Z-axis direction). As the separator 620 moves in response to the movement of the separator moving members 610, and the separator 620 is in contact with the upper side of the positive electrode plate 71, in one or more embodiments, the separator 620 may be in contact with the upper side (e.g., in the +Z-axis direction), a lower side (e.g., in the -Z-axis direction), and one side (e.g., in a +X-axis direction or a -X-axis direction) of the positive electrode plate 71. Accordingly, three surfaces of the positive electrode plate 71 may be surrounded by the separator 620 (e.g., see FIG. 12).

The negative electrode plate moving part 20 moves the negative electrode plate 72 from the negative electrode plate supply part 40 to the stacking part 50. According to one or more embodiments, the negative electrode plate moving part 20 may rotate to move the negative electrode plate 72 from the negative electrode plate supply part 40 to the stacking part 50. The negative electrode plate 72 may be moved from the negative electrode plate moving part 20 to the stacking part 50.

The negative electrode plate 72 moved by the negative electrode plate moving part 20 may be placed to come into contact with an upper side of the separator 620 (e.g., in the +Z-axis direction) in contact with the upper side of the positive electrode plate 71 (e.g., in the +Z-axis direction). According to one or more embodiments, the negative electrode plate 72 may be placed on the separator 620. After the negative electrode plate 72 is placed on the separator 620, the separator moving members 610 of the separator moving part 60 may move. According to one or more embodiments, the separator moving members 610 may move in one direction (e.g., in the X-axis direction).

As the separator moving members 610 move in one direction, the separator 620 may be placed to cover an upper side of the negative electrode plate 72 (e.g., in the +Z-axis direction). According to one or more embodiments, the separator 620 may be in contact with the upper side of the negative electrode plate 72 (e.g., in the +Z-axis direction). As the separator 620 moves in response to the movement of the separator moving members 610, and the separator 620 is in contact with the upper side of the negative electrode plate 72, the separator 620 may be in contact with the upper side (e.g., in the +Z-axis direction), a lower side (e.g., in the -Z-axis direction), and one side (e.g., in the +X-axis direction or the -X-axis direction) of the negative electrode plate 72. Accordingly, three surfaces of the negative electrode plate 72 may be surrounded by the separator 620 (e.g., see FIG. 12).

By operating the apparatus 1 for manufacturing an electrode assembly as described above, the positive electrode plate 71 and the negative electrode plate 72 may be stacked, and the separator 620 may be placed between the positive electrode plate 71 and the negative electrode plate 72. In addition, the shape in which the separator 620 is placed may be formed in a zigzag shape.

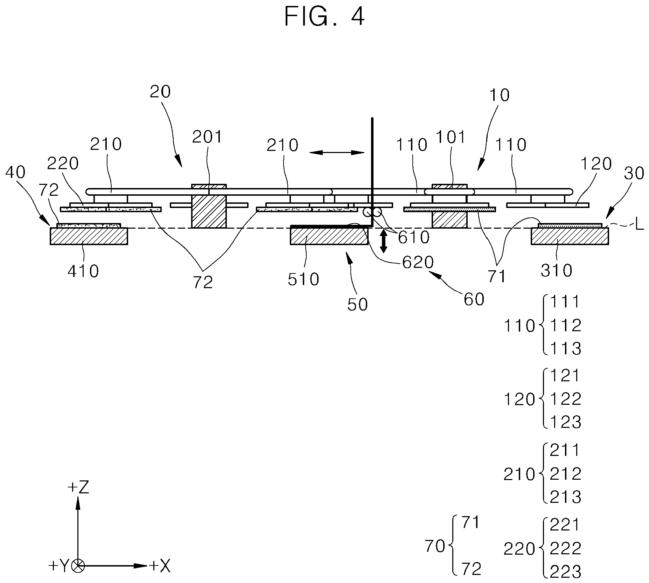

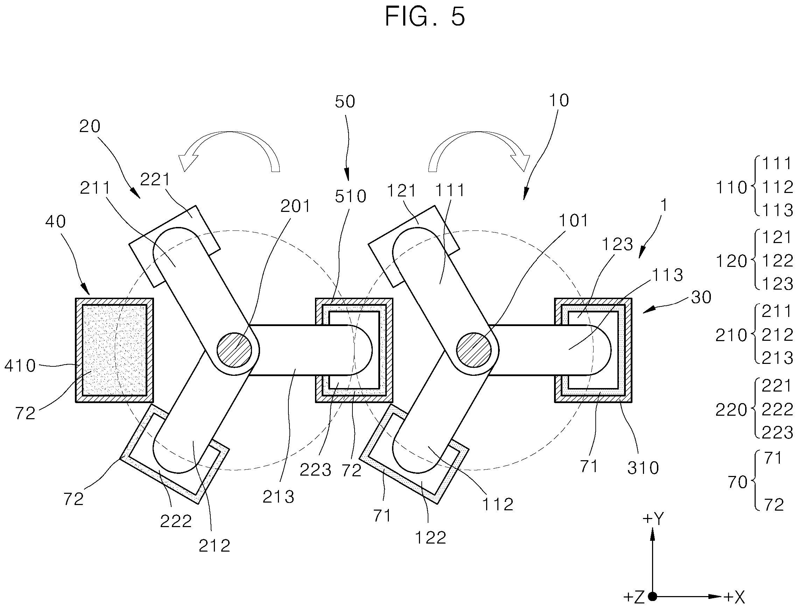

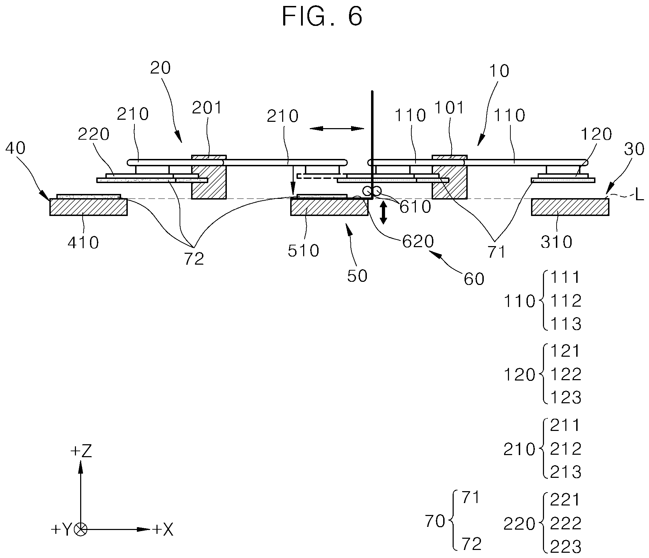

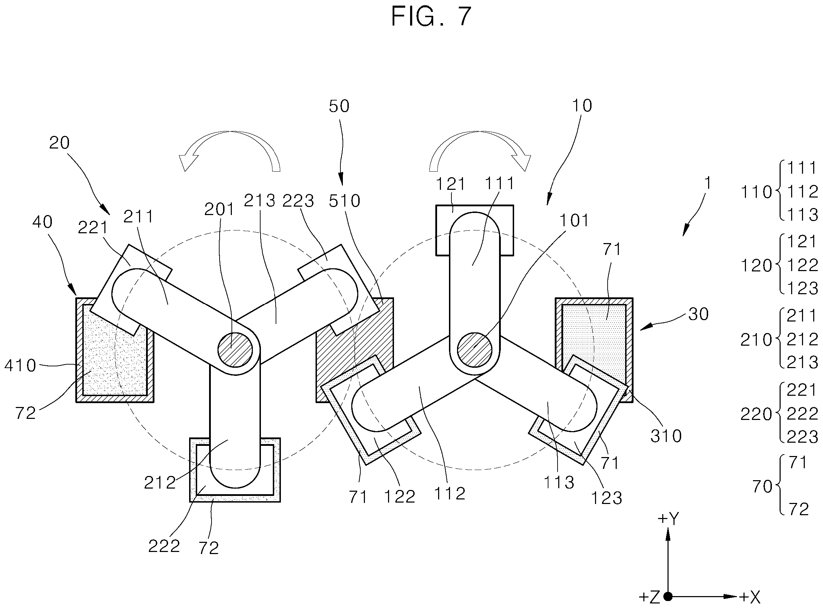

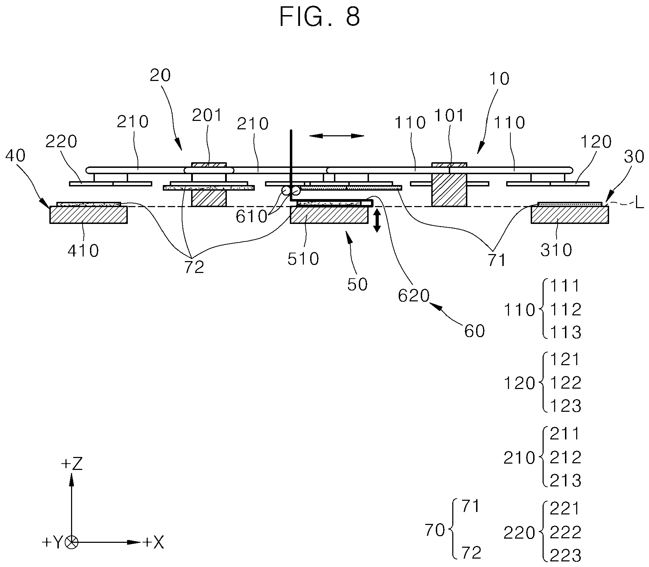

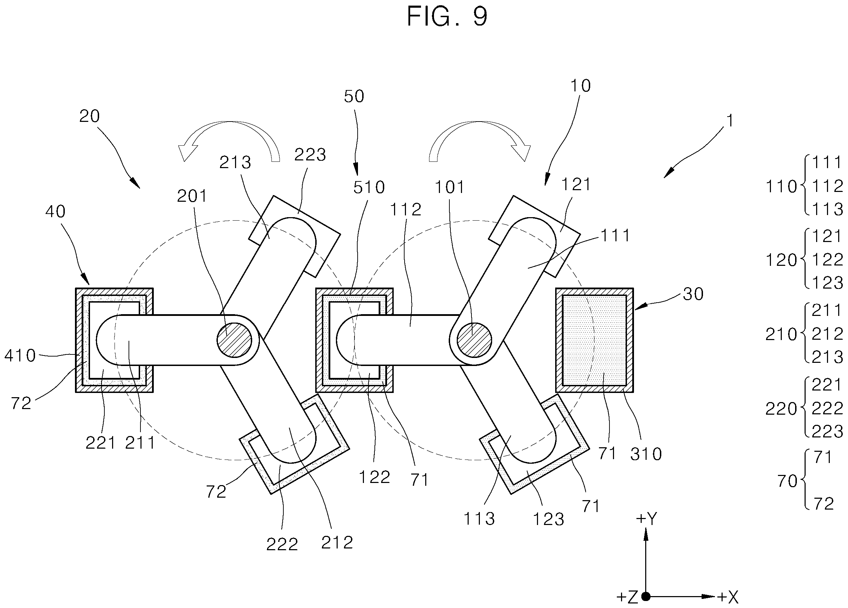

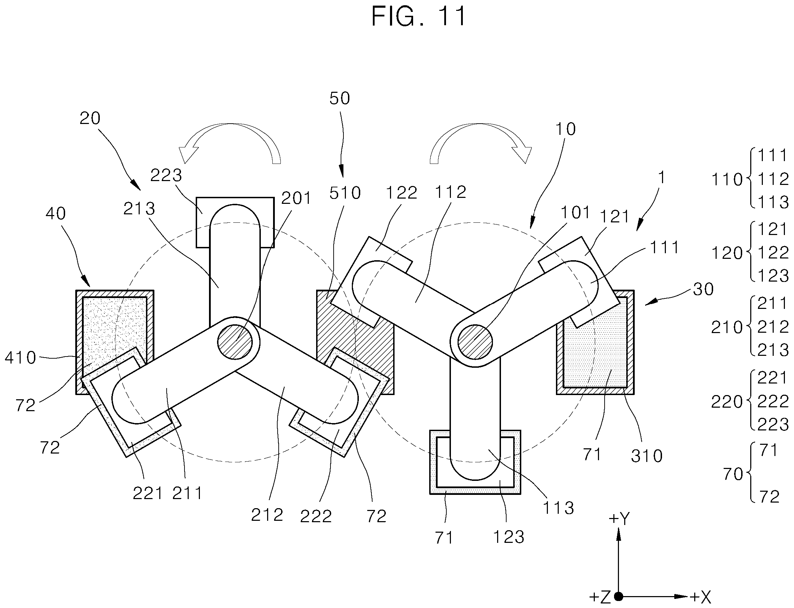

FIGS. 3 and 4 are a plan view and a front view of an apparatus for manufacturing an electrode assembly in a first state according to one or more embodiments of the present disclosure, respectively. FIGS. 5 and 6 are a plan view and a front view of the apparatus for manufacturing an electrode assembly in a second state according to one or more embodiments of the present disclosure, respectively. FIGS. 7 and 8 are a plan view and a front view of the apparatus for manufacturing an electrode assembly in a third state according to one or more embodiments of the present disclosure respectively. FIGS. 9 and 10 are a plan view and a front view of the apparatus for manufacturing an electrode assembly in a fourth state according to one or more embodiments of the present disclosure, respectively. FIGS. 11 and 12 are a plan view and a front view of the apparatus for manufacturing an electrode assembly in a fifth state, respectively, similar to the apparatus for manufacturing an electrode assembly in the first state according to one or more embodiments of the present disclosure.

Three axes shown in FIGS. 3 - 12, i.e., an X-axis, a Y-axis, and a Z-axis may be orthogonal to each other.

An apparatus 1 for manufacturing an electrode assembly, a positive electrode plate moving part 10, a positive electrode plate central shaft 101, a positive electrode plate moving member 110, a positive electrode plate adsorption part 120, a negative electrode plate moving part 20, a negative electrode plate central shaft 201, a negative electrode plate adsorption part 220, a positive electrode plate supply part 30, a positive electrode plate supply member 310, a negative electrode plate supply part 40, a negative electrode plate supply member 410, a stacking part 50, a stack moving member 510, a separator moving part 60, a separator moving member 610, a separator 620, an electrode plate part 70, a positive electrode plate 71, and a negative electrode plate 72 illustrated in FIGS. 3-12 are respectively the same as the apparatus 1 for manufacturing an electrode assembly, the positive electrode plate moving part 10, the positive electrode plate central shaft 101, the positive electrode plate moving member 110, the positive electrode plate adsorption part 120, the negative electrode plate moving part 20, the negative electrode plate central shaft 201, the negative electrode plate adsorption part 220, the positive electrode plate supply part 30, a positive electrode plate supply member 310, the negative electrode plate supply part 40, a negative electrode plate supply member 410, the stacking part 50, a stack moving member 510, the separator moving part 60, the separator moving member 610, the separator 620, the electrode plate part 70, the positive electrode plate 71, and the negative electrode plate 72 illustrated in FIGS. 1 and 2. Accordingly, a description of the same component may be omitted.

Referring to FIGS. 3-12, the positive electrode plate moving part 10 rotates clockwise around the positive electrode plate central shaft 101, and the negative electrode plate moving part 20 may rotate counterclockwise around the negative electrode plate central shaft 201. Because the positive electrode plate moving part 10 and the negative electrode plate moving part 20 rotate in different directions as described above, the positive electrode plate moving part 10 and the negative electrode plate moving part 20 may respectively move the positive electrode plate 71 and the negative electrode plate 72 to the stacking part 50 without colliding with each other.

The positive electrode plate moving part 10 and the negative electrode plate moving part 20 may move synchronously. According to one or more embodiments, an angular speed of the positive electrode plate moving part 10 and an angular speed of the negative electrode plate moving part 20 may be configured to be identical (e.g., substantially the same as each other).

The stacking part 50 may be disposed between the positive electrode plate moving part 10 and the negative electrode plate moving part 20.

The positive electrode plate supply part 30 may include the positive electrode plate supply member 310. The positive electrode plate 71 may be placed on the positive electrode plate supply member 310. The negative electrode plate supply part 40 may include the negative electrode plate supply member 410. The negative electrode plate 72 may be placed on the negative electrode plate supply member 410.

The positive electrode plate supply part 30 may be disposed adjacent to the positive electrode plate moving part 10, and the positive electrode plate moving part 10 may move the positive electrode plate 71 placed on the positive electrode plate supply part 30 to the stacking part 50. According to one or more embodiments, the positive electrode plate adsorption part 120 of the positive electrode plate moving member 110 may adsorb and move the positive electrode plate 71 and then place the positive electrode plate 71 on the stacking part 50. The positive electrode plate adsorption part 120 may include a first positive electrode plate adsorption member 121, a second positive electrode plate adsorption member 122, and a third positive electrode plate adsorption member 123. According to one or more embodiments, the first positive electrode plate adsorption member 121 may be disposed on a first positive electrode plate moving member 111, the second positive electrode plate adsorption member 122 may be disposed on a second positive electrode plate moving member 112, and the third positive electrode plate adsorption member 123 may be disposed on a third positive electrode plate moving member 113. The positive electrode plate adsorption part 120 may adsorb an object by forming a negative pressure. This may allow for fast coupling and release operations.

The negative electrode plate supply part 40 may be disposed adjacent to the negative electrode plate moving part 20, and the negative electrode plate moving part 20 may move the negative electrode plate 72 placed on the negative electrode plate supply part 40 to the stacking part 50. By having the positive electrode plate moving part 10 and the negative electrode plate moving part 20, a stacking speed may be increased. According to one or more embodiments, the negative electrode plate adsorption part 220 of the negative electrode plate moving member 210 may adsorb and move the negative electrode plate 72 and then place the negative electrode plate 72 on the stacking part 50. The negative electrode plate adsorption part 220 may include a first negative electrode plate adsorption member 221, a second negative electrode plate adsorption member 222, and a third negative electrode plate adsorption member 223. According to one or more embodiments, the first negative electrode plate adsorption member 221 may be disposed on a first negative electrode plate moving member 211, the second negative electrode plate adsorption member 222 may be disposed on a second negative electrode plate moving member 212, and the third negative electrode plate adsorption member 223 may be disposed on a third negative electrode plate moving member 213. The negative electrode plate adsorption part 220 may adsorb an object by forming a negative pressure. This may allow for fast coupling and release times.

The first positive electrode plate moving member 111, the second positive electrode plate moving member 112, and the third positive electrode plate moving member 113 may be configured to have a central angle of about 120 degrees (e.g., 120 degrees) with respect to the positive electrode plate central shaft 101. The first negative electrode plate moving member 211, the second negative electrode plate moving member 212, and the third negative electrode plate moving member 213 may be configured to have a central angle of 120 degrees with respect to the negative electrode plate central shaft 201.

The stacking part 50 may include the stack moving member 510. The positive electrode plate 71, the negative electrode plate 72, and/or the separator 620 may be placed on an upper side of the stack moving member 510 (e.g., in the +Z-axis direction). The stack moving member 510 may move parallel to one direction (e.g., in the Z-axis direction). According to one or more embodiments, the stack moving member 510 may move away from (e.g., in the -Z-axis direction) or toward (e.g., in the +Z-axis direction) the positive electrode plate moving part 10 and the negative electrode plate moving part 20. According to one or more embodiments, after the positive electrode plate 71 and/or the negative electrode plate 72 are placed on the stacking part 50, the stack moving member 510 may move downward (e.g., in the -Z-axis direction). This may compensate for an increase in height due to the placement of the positive electrode plate 71 and/or the negative electrode plate 72.

The separator moving part 60 may be disposed on an upper side of the stacking part 50 (e.g., in the +Z-axis direction). According to one or more embodiments, the separator moving part 60 may be disposed between the stacking part 50 and the positive electrode plate moving part 10 and/or the negative electrode plate moving part 20.

The separator moving part 60 may move parallel to one direction (e.g., in the X-axis direction). The separator moving part 60 may include the separator moving member 610. According to one or more embodiments, the separator moving member 610 may include a plurality of rollers. The separator 620 may be disposed between the two separator moving members 610. The separator 620 may be disposed in various shapes on the stacking part 50 according to the movement of the separator moving members 610. According to one or more embodiments, as the separator moving members 610 reciprocate between two points, the separator 620 may be placed on the stacking part 50 in a zigzag shape. In addition, the positive electrode plate 71 and the negative electrode plate 72 may be alternately placed between the separators 620 placed on the stacking part 50 in a zigzag shape.

Referring to FIGS. 3 and 4, the apparatus 1 for manufacturing an electrode assembly in a first state may be seen. The shape of the apparatus 1 for manufacturing an electrode assembly in the first state will be described below.

The first positive electrode plate moving member 111 places the positive electrode plate 71 on the stacking part 50, and rotates and moves toward the positive electrode plate supply part 30 through the stacking part 50, the second positive electrode plate moving member 112 receives the positive electrode plate 71 from the positive electrode plate supply part 30, adsorbs the positive electrode plate 71 through the second positive electrode plate adsorption member 122, and rotates and moves toward the stacking part 50, and the third positive electrode plate moving member 113 places the positive electrode plate 71 on the stacking part 50, and rotates and moves toward the positive electrode plate supply part 30 through the stacking part 50.

The first negative electrode plate moving member 211 places the negative electrode plate 72 on the stacking part 50, and rotates and moves toward the negative electrode plate supply part 40 through the stacking part 50, the second negative electrode plate moving member 212 receives the negative electrode plate 72 from the negative electrode plate supply part 40, adsorbs the negative electrode plate 72 through the second negative electrode plate adsorption member 222, and rotates and moves toward the stacking part 50, and the third negative electrode plate moving member 213 adsorbs the negative electrode plate 72 through the third negative electrode plate adsorption member 223, and rotates and moves toward the stacking part 50.

The stack moving member 510 of the stacking part 50 may be disposed close to a reference line L. According to one or more embodiments, an upper surface of the stack moving member 510 (e.g., in the +Z-axis direction) may be disposed on the reference line L. The stack moving member 510 may move upward and downward (e.g., in the Z-axis direction). The stack moving member 510 and the separator 620 may be in contact with each other. The separator 620 may be supplied from the upper side (e.g., in the +Z-axis direction) to the lower side (e.g., in the -Z-axis direction), and may be moved in one direction (e.g., in the X-axis direction) by the separator moving members 610.

Referring to FIGS. 5 and 6, the apparatus 1 for manufacturing an electrode assembly in a second state may be seen. The shape of the apparatus 1 for manufacturing an electrode assembly in the second state will be described below.

The first positive electrode plate moving member 111 may place the positive electrode plate 71 on the stacking part 50, and rotate and move toward the positive electrode plate supply part 30 through the stacking part 50, the second positive electrode plate moving member 112 may receive the positive electrode plate 71 from the positive electrode plate supply part 30, adsorb the positive electrode plate 71 through the second positive electrode plate adsorption member 122, and rotate and move toward the stacking part 50, and the third positive electrode plate adsorption member 123 of the third positive electrode plate moving member 113 may adsorb the positive electrode plate 71 from the positive electrode plate supply part 30.

The first negative electrode plate moving member 211 may place the negative electrode plate 72 on the stacking part 50, and rotate and move toward the negative electrode plate supply part 40 through the stacking part 50, the second negative electrode plate moving member 212 may receive the negative electrode plate 72 from the negative electrode plate supply part 40, adsorb the negative electrode plate 72 through the second negative electrode plate adsorption member 222, and rotate and move toward the stacking part 50, and the third negative electrode plate moving member 213 may place the negative electrode plate 72 adsorbed through the third negative electrode plate adsorption member 223 on the stacking part 50.

The negative electrode plate 72 may be placed on the upper side of the separator 620 (e.g., in the +Z-axis direction) placed on the stacking part 50. When the negative pressure is released from the third negative electrode plate adsorption member 223, the negative electrode plate 72 may be placed on the upper side of the separator 620 placed on the stacking part 50. After the negative electrode plate 72 is placed on the stacking part 50, the stacking part 50 may move downward (e.g., in the -Z-axis direction).

As the stacking part 50 moves downward, a distance between the stacking part 50 and the positive and negative electrode plate moving parts 10 and 20 may be compensated for by as much as a thickness of the separator 620 stacked on the stacking part 50, and a thickness of each of the negative electrode plate 72 and the positive electrode plate 71.

Referring to FIGS. 7 and 8, the apparatus 1 for manufacturing an electrode assembly in a third state may be seen. The shape of the apparatus 1 for manufacturing an electrode assembly in the third state will be described below.

The first positive electrode plate moving member 111 may place the positive electrode plate 71 on the stacking part 50, and rotate and move toward the positive electrode plate supply part 30 through the stacking part 50, the second positive electrode plate moving member 112 may receive the positive electrode plate 71 from the positive electrode plate supply part 30, adsorb the positive electrode plate 71 through the second positive electrode plate adsorption member 122, and rotate and move toward the stacking part 50, and the third positive electrode plate adsorption member 123 of the third positive electrode plate moving member 113 may receive the positive electrode plate 71 from the positive electrode plate supply part 30, adsorb the positive electrode plate 71 through the third positive electrode plate adsorption member 123, and rotate and move toward the stacking part 50.

The first negative electrode plate moving member 211 may place the negative electrode plate 72 on the stacking part 50, and rotate and move toward the negative electrode plate supply part 40 through the stacking part 50, the second negative electrode plate moving member 212 may receive the negative electrode plate 72 from the negative electrode plate supply part 40, adsorb the negative electrode plate 72 through the second negative electrode plate adsorption member 222, and rotate and move toward the stacking part 50, and the third negative electrode plate moving member 213 may place the negative electrode plate 72 adsorbed through the third negative electrode plate adsorption member 223 on the stacking part 50 and move toward the negative electrode plate supply part 40 through the stacking part 50.

When the negative electrode plate 72 is placed on the stacking part 50, the separator moving part 60 may move toward the negative electrode plate moving part 20 (e.g., in the -X-axis direction). Even when the separator moving part 60 moves toward the negative electrode plate moving part 20, because the negative electrode plate moving part 20 is in a state of being rotated and spaced (e.g., spaced apart) from the stacking part 50, the separator moving part 60 may not collide with the negative electrode plate moving part 20.

In addition, the negative electrode plate 72 may be placed so that three surfaces thereof are surrounded by the separator 620 as the separator moving part 60 moves toward the negative electrode plate moving part 20. Accordingly, the separator 620 may be placed in a zigzag shape.

Furthermore, the stacking part 50 may move downward (e.g., in the -Z-axis direction). As the stacking part 50 moves downward, the distance between the stacking part 50 and the positive and negative electrode plate moving parts 10 and 20 may be compensated for by as much as the thickness of the separator 620 stacked on the stacking part 50, and the thickness of each of the negative electrode plate 72 and the positive electrode plate 71.

The stacking part 50 may move after the positive electrode plate 71 and/or the negative electrode plate 72 are stacked, and/or after the separator 620 moves to cover the positive electrode plate 71 and/or the negative electrode plate 72 after the positive electrode plate 71 and/or the negative electrode plate 72 are stacked.

As such, as the stacking part 50 moves, the height at which the positive electrode plate 71 and/or the negative electrode plate 72 stacked on the stacking part 50 may be maintained substantially constant (e.g., may be maintained constant). Accordingly , the position at which the positive electrode plate 71 and/or the negative electrode plate 72 are stacked on the stacking part 50 may be maintained at the reference line L.

Referring to FIGS. 9 and 10, the apparatus 1 for manufacturing an electrode assembly in a fourth state may be seen. The shape of the apparatus 1 for manufacturing an electrode assembly in the fourth state will be described below.

The first positive electrode plate moving member 111 may place the positive electrode plate 71 on the stacking part 50, and rotate and move toward the positive electrode plate supply part 30 through the stacking part 50, and the second positive electrode plate moving member 112 may receive the positive electrode plate 71 from the positive electrode plate supply part 30, adsorb the positive electrode plate 71 through the second positive electrode plate adsorption member 122, rotate and move toward the stacking part 50, and the third positive electrode plate moving member 113 may place the positive electrode plate 71 adsorbed through the third positive electrode plate adsorption member 123 on the stacking part 50.

The first negative electrode plate moving member 211 may adsorb the negative electrode plate 72 from the negative electrode plate supply part 40 through the first negative electrode plate adsorption member 221, the second negative electrode plate moving member 212 may receive the negative electrode plate 72 from the negative electrode plate supply part 40, adsorb the negative electrode plate 72 through the second negative electrode plate adsorption member 222, and rotate and move toward the stacking part 50, and the third negative electrode plate moving member 213 may place the negative electrode plate 72 adsorbed through the third negative electrode plate adsorption member 223 on the stacking part 50 and move toward the negative electrode plate supply part 40 through the stacking part 50.

The positive electrode plate 71 may be placed on the upper side of the separator 620 (e.g., in the +Z-axis direction) in contact with the upper side of the negative electrode plate 72 (e.g., in the +Z-axis direction). When the negative pressure is released from the second positive electrode plate adsorption member 122, the positive electrode plate 71 may be placed on the upper side of the separator 620 placed on the stacking part 50. After the positive electrode plate 71 is placed on the stacking part 50, the stacking part 50 may move downward (e.g., in the -Z-axis direction).

As the stacking part 50 moves downward, the distance between the stacking part 50 and the positive and negative electrode plate moving parts 10 and 20 may be compensated for by as much as the thickness of the separator 620 stacked on the stacking part 50, and the thickness of each of the negative electrode plate 72 and the positive electrode plate 71.

Referring to FIGS. 11 and 12, the apparatus 1 for manufacturing an electrode assembly in a fifth state similar to the apparatus 1 for manufacturing an electrode assembly the first state may be seen.

The positive electrode plate moving part 10 and the negative electrode plate moving part 20 of the apparatus 1 for manufacturing an electrode assembly in the fifth state have the same shape as the positive electrode plate moving part 10 and the negative electrode plate moving part 20 of the apparatus 1 for manufacturing an electrode assembly in the first state, which is further rotated by 120 degrees.

When the positive electrode plate moving part 10 of the apparatus 1 for manufacturing an electrode assembly in the first state rotates clockwise by 120 degrees, the positive electrode plate moving part 10 of the apparatus 1 for manufacturing an electrode assembly in the first state is the same as the positive electrode plate moving part 10 of the apparatus 1 for manufacturing an electrode assembly in the fifth state.

When the negative electrode plate moving part 20 of the apparatus 1 for manufacturing an electrode assembly in the first state rotates counterclockwise by 120 degrees, the negative electrode plate moving part 20 of the apparatus 1 for manufacturing an electrode assembly in the first state is the same as the negative electrode plate moving part 20 of the apparatus 1 for manufacturing an electrode assembly in the fifth state.

The process of stacking the positive electrode plate 71 and the negative electrode plate 72 on the stacking part 50 while rotating the positive electrode plate moving part 10 and the negative electrode plate moving part 20 may be repeated.

When the positive electrode plate 71 is placed on the stacking part 50, the separator moving part 60 may move toward the positive electrode plate moving part 10 (e.g., in the +X-axis direction). Even when the separator moving part 60 moves toward the positive electrode plate moving part 10, because the positive electrode plate moving part 10 is in a state of being rotated and spaced (e.g., spaced apart) from the stacking part 50, the separator moving part 60 may not collide with the positive electrode plate moving part 10.

In addition, the positive electrode plate 71 may be placed so that three surfaces thereof are surrounded by the separator 620 as the separator moving part 60 moves toward the positive electrode plate moving part 10. Accordingly, the separator 620 may be placed in a zigzag shape.

Furthermore, the stacking part 50 may move downward (e.g., in the -Z-axis direction). As the stacking part 50 moves downward, the distance between the stacking part 50 and the positive and negative electrode plate moving parts 10 and 20 may be compensated for by as much as the thickness of the separator 620 stacked on the stacking part 50, and the thickness of each of the negative electrode plate 72 and the positive electrode plate 71.

FIG. 13 is a perspective view of the stacking part 50 of the apparatus for manufacturing an electrode assembly according to one or more embodiments of the present disclosure.

The stacking part 50, the stack moving member 510, the separator 620, the positive electrode plate 71, and the negative electrode plate 72 illustrated in FIG. 13 are the same as the stacking part 50, the stack moving member 510, the separator 620, the positive electrode plate 71, and the negative electrode plate 72 illustrated in FIGS. 1-12. Accordingly, a description of the same component may be omitted.

The apparatus 1 for manufacturing an electrode assembly may manufacture an electrode assembly EA including the positive electrode plate 71, the negative electrode plate 72, and the separator 620 through the process described above with reference to FIGS. 3-12. In the apparatus 1 for manufacturing an electrode assembly according to one or more embodiments of the present disclosure, a manufacturing speed of the electrode assembly EA may be maintained even when the size of the positive electrode plate 71 and the negative electrode plate 72 is configured to be larger than a set value. Accordingly, initial investment costs for the apparatus 1 for manufacturing an electrode assembly may be reduced and productivity may be improved.

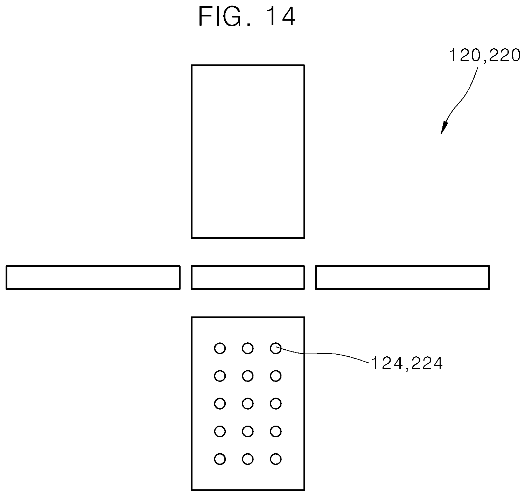

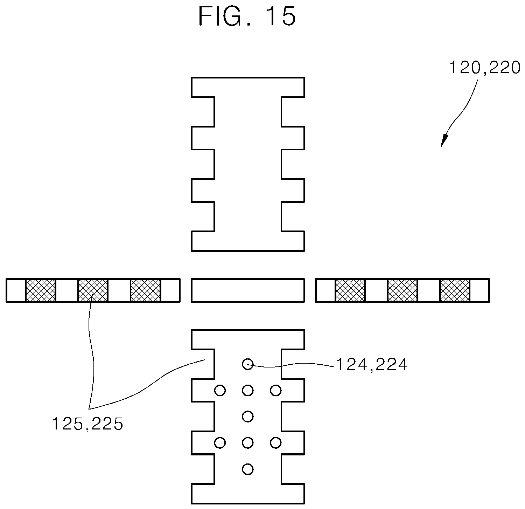

FIG. 14 illustrates a first embodiment of the positive electrode plate adsorption part and the negative electrode plate adsorption part when viewed from the front, left, right, top, and bottom sides, and FIG. 15 illustrates a second embodiment of the positive electrode plate adsorption part and the negative electrode plate adsorption part when viewed from the front, left, right, top, and bottom sides.

The positive electrode plate adsorption part 120 and the negative electrode plate adsorption part 220 illustrated in FIG. 14 correspond to a first embodiment of the positive electrode plate adsorption part 120 and the negative electrode plate adsorption part 220 illustrated in FIGS. 1-13, and the positive electrode plate adsorption part 120 and the negative electrode plate adsorption part 220 illustrated in FIG. 15 correspond to a second embodiment of the positive electrode plate adsorption part 120 and the negative electrode plate adsorption part 220 illustrated in FIGS. 1-13.

Referring to FIG. 14, the positive electrode plate adsorption part 120 and the negative electrode plate adsorption part 220 may be formed in a hexahedral shape. Positive electrode plate adsorption holes 124 and the negative electrode plate adsorption holes 224 may be disposed in the positive electrode plate adsorption part 120 and the negative electrode plate adsorption part 220, respectively. A negative pressure may be formed through the positive electrode plate adsorption holes 124 and the negative electrode plate adsorption holes 224. The positive electrode plate 71 and the negative electrode plate 72 may be adsorbed to the positive electrode plate adsorption part 120 and the negative electrode plate adsorption part 220 through the negative pressure formed by the positive electrode plate adsorption holes 124 and the negative electrode plate adsorption holes 224. Thus, a rapid coupling is provided improving the productivity of the apparatus 1 for manufacturing an electrode assembly.

Referring to FIG. 15, a positive electrode adsorption recess part 125 and a negative electrode adsorption recess part 225 may be disposed in the positive electrode plate adsorption part 120 and the negative electrode plate adsorption part 220, respectively. The positive electrode adsorption recess part 125 and the negative electrode adsorption recess part 225 may be formed as recessed spaces.

Even when the positive electrode plate 71 and the negative electrode plate 72 are not easily separated from the positive electrode plate adsorption part 120 and the negative electrode plate adsorption part 220, as the positive electrode adsorption recess part 125 and the negative electrode adsorption recess part 225 are formed, the positive electrode plate 71 and the negative electrode plate 72 may be easily separated from the positive electrode plate adsorption part 120 and the negative electrode plate adsorption part 220 by disposing configurations that pass through the positive electrode adsorption recess part 125 and the negative electrode adsorption recess part 225. Accordingly, the productivity of the apparatus 1 for manufacturing an electrode assembly may be improved.

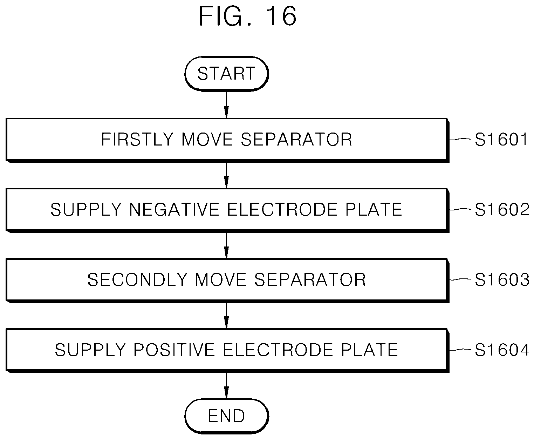

FIG. 16 is a flowchart of a method for manufacturing an electrode assembly according to one or more embodiments of the present disclosure.

The method for manufacturing an electrode assembly may include first separator moving operation S1601 (refer to FIG. 16) of moving the separator 620 through the separator moving part 60 to place the separator 620 on the stacking part 50.

First separator moving operation S1601 may include moving the separator moving part 60 toward the positive electrode plate moving part 10. As the separator moving part 60 moves toward the positive electrode plate moving part 10, the separator 620 may be moved by the separator moving part 60 and placed to be spread out on the stack moving member 510 of the stacking part 50.

First separator moving operation S1601 may include moving the stacking part 50 such that the stacking part 50 is away from the positive electrode plate moving part 10 and the negative electrode plate moving part 20. According to one or more embodiments, the stacking part 50 may descend (e.g., in the -Z-axis direction). Accordingly, the position at which the positive electrode plate 71 and the negative electrode plate 72 are placed on the stacking part 50 may be maintained at a reference line L.

The method for manufacturing an electrode assembly may include a negative electrode plate supply operation S1602 (refer to FIG. 16) of moving the negative electrode plate 72 placed on the negative electrode plate supply part 40 to the stacking part 50 through the negative electrode plate moving part 20. The negative electrode plate moving part 20 may place the negative electrode plate 72 on the separator 620 placed on the stacking part 50.

Negative electrode plate supply operation S1602 may include moving the stacking part 50 such that the stacking part 50 is away from the positive electrode plate moving part 10 and the negative electrode plate moving part 20. According to one or more embodiments, the stacking part 50 may descend (e.g., in the -Z-axis direction). Accordingly, the position at which the positive electrode plate 71 and the negative electrode plate 72 are placed on the stacking part 50 may be maintained at the reference line L.

The method for manufacturing an electrode assembly may include second separator moving operation S1603 (refer to FIG. 16) of moving the separator 620 through the separator moving part 60 to place the separator 620 on the negative electrode plate 72 stacked on the stacking part 50.

Second separator moving operation S1603 may include moving the separator moving part 60 toward the negative electrode plate moving part 20. As the separator moving part 60 moves toward the negative electrode plate moving part 20, the separator 620 may be moved by the separator moving part 60 and placed to be spread out on an upper surface of the negative electrode plate 72 (e.g., in the +Z-axis direction).

Second separator moving operation S1603 may include moving the stacking part 50 such that the stacking part 50 is away from the positive electrode plate moving part 10 and the negative electrode plate moving part 20. According to one or more embodiments, the stacking part 50 may descend (e.g., in the -Z-axis direction). Accordingly, the position at which the positive electrode plate 71 and the negative electrode plate 72 are placed on the stacking part 50 may be maintained at the reference line L.

The method for manufacturing an electrode assembly may include positive electrode plate supply operation S1604 (refer to FIG. 16) of moving the positive electrode plate 71 placed on the positive electrode plate supply part 30 to the stacking part 50 through the positive electrode plate moving part 10. The positive electrode plate moving part 10 may place the positive electrode plate 71 on the separator 620 placed on the upper surface of the negative electrode plate 72 (e.g., in the +Z-axis direction).

Positive electrode plate supply operation S1604 may include moving the stacking part 50 such that the stacking part 50 is away from the positive electrode plate moving part 10 and the negative electrode plate moving part 20. According to one or more embodiments, the stacking part 50 may descend (e.g., in the -Z-axis direction). Accordingly, the position at which the positive electrode plate 71 and the negative electrode plate 72 are placed on the stacking part 50 may be maintained at the reference line L.

With the above-described manufacturing method, the productivity of the electrode assembly EA can be increased, and the electrode assembly EA including the positive electrode plate 71 and the negative electrode plate 72 having a size greater than or equal to a set size may be rapidly manufactured.

According to an apparatus and method for manufacturing an electrode assembly according to one or more embodiments of the present disclosure, a stacking speed may be improved.

Further, according to an apparatus and method for manufacturing an electrode assembly according to one or more embodiments of the present disclosure, initial investment costs may be reduced and productivity may be improved.

Furthermore, according to an apparatus and method for manufacturing an electrode assembly according to one or more embodiments of the present disclosure, a large-sized electrode assembly may be rapidly manufactured.

However, the effects, aspects, and features obtainable through the present disclosure are not limited to the above effects, aspects, and features and other technical effects, aspects, and features that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments may be derived by those skilled in the art on the basis of the embodiments.

Therefore, the technical scope of the present disclosure may be defined by the appended claims and their equivalents.

## Claims

1. An apparatus (1) for manufacturing an electrode assembly (AE), comprising:
a positive electrode plate supply part (30) configured to supply a positive electrode plate (71);
a positive electrode plate moving part (10) configured to move the positive electrode plate (71) located on the positive electrode plate supply part (30);
a negative electrode plate supply part (40) configured to supply a negative electrode plate (72);
a negative electrode plate moving part (20) configured to move the negative electrode plate (72) located on the negative electrode plate supply part (40);
a stacking part (50); and
wherein the positive electrode plate moving part (10) and the negative electrode plate moving part (20) are configured to move the negative electrode plate (72) and the positive pelectrode plates (71) to the stacking part (50) to alternately stack the negative electrode plate (72) and the positive electrode plates (71) on the stacking part (50).

2. The apparatus (1) as claimed in claim 1, further comprising a separator moving part (60) configured to move a separator (620) to place the separator (620) between the positive electrode plate (71) and the negative electrode plate (72) stacked on the stacking part (50).

3. The apparatus (1) as claimed in claim 2, wherein the separator moving part (60) comprises a separator moving member (610) configured to contact with the separator (620) and configured to move between the positive electrode plate moving part (10) and the negative electrode plate moving part (20) to place the separator (620) on the stacking part (50).

4. The apparatus (1) as claimed in claim 3, wherein:
the separator moving member (610) comprises a plurality of separator moving members (610) so that the separator (620) is located between the plurality of separator moving members (610).

5. The apparatus (1) as claimed in one of the preceding claims 3 to 4, wherein:
the separator moving member (610) is configured to move toward the positive electrode plate moving part (10) when the positive electrode plate (71) is stacked on the stacking part (50); and
the separator moving member (610) is configured to move toward the negative electrode plate moving part (20) when the negative electrode plate (72) is stacked on the stacking part (50).

6. The apparatus (1) as claimed in one of the preceding claims 1 to 5, wherein, as the positive electrode plate (71) and the negative electrode plate (72) are stacked, the stacking part (50) is configured to move away from the positive electrode plate moving part (10) and the negative electrode plate moving part (20).

7. The apparatus (1) as claimed in claim 6, wherein the stacking part (50) is configured to move a set distance when one positive electrode plate (71) or one negative electrode plate (72) is stacked.

8. The apparatus (1) as claimed in one of the preceding claims 1 to 7, wherein:
the positive electrode plate moving part (10) comprises a positive electrode plate moving member (110) configured to rotate around a positive electrode plate central shaft (101), and
the negative electrode plate moving part (20) comprises a negative electrode plate moving member (210) configured to rotate around a negative electrode plate central shaft (201).

9. The apparatus (1) as claimed in claim 8, wherein:
the positive electrode plate moving part (10) comprises a positive electrode plate adsorption part (110) connected to the positive electrode plate moving member (110) configured to bring the positive electrode plate adsorption part (110) into contact with the positive electrode plate (71); and
the negative electrode plate moving part (20) comprises a negative electrode plate adsorption part (220) connected to the negative electrode plate moving member (210) configured to bring the negative electrode plate adsorption part (220) into contact with the negative electrode plate (72).

10. The apparatus (1) as claimed in claim 9, wherein each of the positive electrode plate adsorption part (120) and/or the negative electrode plate adsorption part (220) comprises a plurality of adsorption holes (124, 224).

11. The apparatus (1) as claimed in one of the preceding claims 8 to 10, wherein:
the positive electrode plate moving member (110) is configured to rotate in a first direction, and
the negative electrode plate moving member (210) is configured to rotate in a second direction opposite to the first direction.

12. The apparatus (1) as claimed in claim 11, wherein the positive electrode plate moving member (110) and the negative electrode plate moving member (210) are configured to rotate at a same angular speed.

13. A method for manufacturing an electrode assembly, comprising:
moving a positive electrode plate (71) through a positive electrode plate moving part (10) located on a positive electrode plate supply part (30);
moving a negative electrode plate (72) through a negative electrode plate moving part (20) located on a negative electrode plate supply part (40); and
moving the negative electrode plate (72) and the positive electrode plates (71) to a stacking part (50) to alternately stack the negative electrode plate (72) and the positive electrode plate (71) on the stacking part (50).

14. The method as claimed in claim 13, comprising:
moving (S1601) a separator (620) through a separator moving part (60) to place the separator (620) on the stacking part (50) in a first separator moving operation;
moving (S1602) the negative electrode plate (72) located on the negative electrode plate supply part (40) to the separator (620) located on the stacking part (50) through the negative electrode plate moving part (20);
moving (S1603) the separator (620) through the separator moving part (60) to bring the separator (620) into contact with the negative electrode plate (72) located on the stacking part (50) in a second separator moving operation; and
moving (S1604) the positive electrode plate (71) located on the positive electrode plate supply part (30) to the separator (620) located on the stacking part (50) through a positive electrode plate moving part (10).

15. The method as claimed in claim 14, wherein:
the moving (S1601) the separator (620) through the separator moving part (60) in the first separator moving operation comprises moving the separator moving part (60) toward the positive electrode plate moving part (10), and
the moving (S1603) the separator (620) through the separator moving part (60) in the second separator moving operation comprises moving the separator moving part (60) toward the negative electrode plate moving part (20), and/or
wherein the moving (S1601) the separator (620) through the separator moving part (60) in the first separator moving operation comprises moving the stacking part (50) away from the positive electrode plate moving part (10) and the negative electrode plate moving part (20).
